# EUROPÄISCHE PATENTSCHRIFT

(11) **EP 0 627 454 B1**
(45) Veröffentlichungstag und Bekanntmachung des Hinweises auf die Patenterteilung: **03.11.1999**
(21) Anmeldenummer: 94108178.8
(22) Anmeldetag: 27.05.1994
(51) Int. Cl.: C08G 69/26, C08G 69/36, C09J 177/00, C09J 177/06

(54) **Verwendung von Copolyamiden zum Heisssiegeln**
Use of copolyamides as hot-melt adhesives
Utilisation de copolyamides comme adhesifs thermofusibles

(30) Priorität: 29.05.1993 DE 4318047
(43) Veröffentlichungstag der Anmeldung: 07.12.1994
(73) Patentinhaber: Elf Atochem Deutschland GmbH, 40474 Düsseldorf (DE)
(72) Erfinder: de Jong, Eduard, D-53844 Troisdorf (DE); Hapelt, Karl-Heinz, D-53127 Bonn (DE)
(74) Vertreter: Leifert, Elmar, Dr.

(56) Entgegenhaltungen:
- EP-A- 0 020 863
- DE-A- 2 238 547
- US-A- 4 030 957
- US-A- 4 093 492
- DATABASE WPI Section Ch, Week 7540 Derwent Publications Ltd., London, GB; Class A81, AN 75-66146W XP002027425 & JP 50 022 034 A (TORAY INDS KK) , 8.März 1975

## Beschreibung

Die Erfindung betrifft die Verwendung von Copolyamiden als Schmelzkleber zum Heißsiegeln insbesondere von Textilien, wobei im Copolyamid mindestens 3 Monomer-Komponenten einpolymerisiert sind, die aus folgender Gruppe ausgewählt sind: äquimolares Gemisch von Adipinsäure und Hexamethylendiamin (6,6-Salz), Laurinlactam, 11-Aminoundecansäure, äquimolares Gemisch von Azelainsäure und Hexamethylendiamin (6,9-Salz), äquimolares Gemisch von Sebacinsäure und Hexamethylendiamin (6,10-Salz) und äquimolares Gemisch von Dodecandisäure und Hexamethylendiamin (6,12-Salz), wobei der Schmelzpunkt des Copolyamids weniger als 140°C beträgt und mindestens 10 Gewichts-% Laurinlactam und/oder 11-Aminoundecansäure einpolymerisiert sind.

Schmelzkleber auf der Basis aliphatischer Copolyamide zur Herstellung waschbeständiger und gegen chemische Reinigung beständiger Verklebungen von Einlagestoffen mit Oberstoffen (sogenannte Frontfixierung) sind seit langem bekannt und werden in großem Maße weltweit eingesetzt. Solche Polyamide sind beispielsweise in der DE-OS 15 94 233 offenbart. Die Einstellung der zum Verkleben der Textilien erwünschten Schmelztemperatur von 80 bis 130°C erfolgt dadurch, daß zusätzlich zu den üblicherweise verwendeten Bestandteilen Caprolactam/ω-Aminocapronsäure und Laurinlactam/ω-Aminolaurinsäure weitere ω-Aminocarbonsäuren, z. B. 11-Aminoundecansäure, und weitere Polyamidbildner wie 6,6-Salz, 6,9-Salz, 6,10-Salz und/oder 6,12-Salz in unterschiedlichen Mengenverhältnissen kombiniert werden.

In der DE-OS 23 24 160 ist beispielsweise ein Copolyamid offenbart, in dem 20 - 40 Gewichts-% Caprolactam, 20 - 35 Gewichts-% Laurinlactam, 15 - 35 Gewichts-% 11-Aminoundecansäure und 15 - 40 Gewichts-% eines äquimolaren Gemisches von Hexamethylendiamin und einer Dicarbonsäure mit 6, 9, 10, 11, oder 12 Kohlenstoffatomen einpolymerisiert sind.

In der DE-OS 19 39 758 sind Polyamide offenbart, die eine hohe Wasseraufnahme und gleichzeitige Beständigkeit gegen heißes Wasser aufweisen. Diese Polyamide enthalten zwingend bestimmte Anteile verzweigter Diamine.

Neben diesen bekannten Polyamiden, die alle zwingend Laurinlactam als Monomer-Bestandteil enthalten, sind auch Copolyamide ohne Laurinlactam bekannt geworden, die als Textilschmelzkleber verwendbar sind. So sind z. B. in DE-PS 26 15 765 und DE-PS 24 18 988 Copolyamide offenbart, in denen Dimer-Fettsäure statt Laurinlactam enthalten ist.

Die bekannten Polyamide weisen im Schmelzzustand eine ausreichend hohe Klebkraft auf, so daß sie in der Textilindustrie zum Heißsiegeln und Verkleben von Geweben verwendet werden können. Sie besitzen auch eine gute Beständigkeit gegenüber den bei der chemischen Reinigung von Textilien eingesetzten Lösungsmitteln und gegenüber den in der Textilindustrie üblichen Waschtemperaturen von bis zu etwa 80°C. Diese Beständigkeit ist jedoch weitgehend von einem hohen Gehalt an Laurinlactam und/oder 11-Aminoundecansäure bzw. Dimer-Fettsäure abhängig. Mit zunehmendem Gehalt an diesen Grundbausteinen steigt zwar die Waschbeständigkeit bei höheren Waschtemperaturen an, gleichzeitig tritt jedoch ein unerwünschtes Ansteigen der Schmelztemperatur der Copolyamide auf. Die bekannten Copolyamide können daher nicht zum Heißsiegeln von temperaturempfindlichen Substraten, wie Leder, temperaturempfindliche Natur- und/oder Kunststoffvliese, -filze, -flausche und dergleichen eingesetzt werden. Als Lösung für dieses Problem wurde in der DE-OS 23 24 160 ein große Anteile Caprolactam enthaltendes Copolyamid vorgeschlagen, das niedrige Schmelztemperaturen von weniger als 115°C besitzt. In diesem Copolyamid müssen 20 - 40 Gewichts-% Caprolactam enthalten sein. Dieses Copolyamid ist zum Heißsiegeln temperaturempfindlicher Substrate geeignet und besitzt trotz niedriger Klebetemperaturen eine hohe Klebkraft und eine hohe Beständigkeit gegenüber chemischen Reinigungsmitteln.

Die Copolyamide, die unter Verwendung von Caprolactam hergestellt werden, enthalten jedoch 8 - 10 Gewichts-% des zur Polymerisation eingesetzten Caprolactams in monomerer Form. Dies bedeutet, daß beim Verkleben unter erhöhter Temperatur Caprolactam verdampft und in die Raumluft gelangt, was unter Umwelt- und Entsorgungs-Gesichtspunkten einen gravierenden Nachteil der bekannten Copolyamid-Schmelzkleber darstellt.

EP-A-0 020 863 beschriebt ein Polyamidgemisch von caprolactamhaltigen copolyamiden.

Werden solche bekannten caprolactamhaltigen Copolyamide beispielsweise in der Automobilindustrie zum Verkleben von textilen Verkleidungen, beispielsweise von Türen, Himmeln und Hutablagen in Kraftfahrtzeugen verwendet, so tritt immer das sogenannte "Fogging" auf, d. h. es bilden sich nach einiger Zeit Ablagerungen von Caprolactam an den Scheiben des Kraftfahrzeugs.

Ein gravierender Nachteil der bekannten Copolyamide ist demnach der Gehalt an monomerem Caprolactam. Caprolactam war jedoch als Bestandteil zur Einstellung niedriger Schmelztemperaturen, die zum Verkleben empfindlicher Substrate notwendig sind, bisher als unerläßlich angesehen worden.

Aufgabe der vorliegenden Erfindung war es daher, Copolyamide zur Verfügung zu stellen, die zum Verkleben empfindlicher Textilien bei niedrigen Temperaturen geeignet sind, jedoch kein Caprolactam enthalten. Die Copolyamide sollten weiterhin eine hohe Klebkraft, eine gute Beständigkeit gegen Heißwasser und chemische Reinigung aufweisen.

Überraschenderweise wurde nun gefunden, daß diese Aufgabe durch die Verwendung von Copolyamiden als Schmelzkleber zum Heißsiegeln gelöst werden kann, wobei das Copolyamid dadurch gekennzeichnet ist, daß mindestens 3 der folgenden Monomer-Komponenten einpolymerisiert sind:
A)
   a) äquimolares Gemisch von Adipinsäure und Hexamethylendiamin (6,6-Salz)
   b) Laurinlactam
   c) 11-Aminoundecansäure
   d) äquimolares Gemisch von Azelainsäure und Hexamethylendiamin (6,9-Salz)
   e) äquimolares Gemisch von Sebacinsäure und Hexamethylendiamin (6,10-Salz)
   f) äquimolares Gemisch von Dodecandisäure und Hexamethylendiamin (6,12-Salz)
B) der Schmelzpunkt des Copolyamids weniger als 140°C beträgt.
und
C) Laurinlactam und/oder 11-Aminoundecansäure in einer Menge von mindestens 10 Gewichts-% einpolymerisiert sind, wobei die Gesamtmenge der Komponenten a) bis f) 100 Gewichts-% beträgt.

Die erfindungsgemäßen Copolyamide lassen sich überraschenderweise bei Temperaturen deutlich unter ihrer Schmelztemperatur verkleben und zeigen eine ausgezeichnete Wasch- und Chemisch-Reinigungsbeständigkeit. Sie werden ohne Verwendung von Caprolactam hergestellt und überwinden daher die obengenannten Nachteile wie Freisetzung von Caprolactam beim Verkleben und "Fogging".

Gemäß einer bevorzugten Ausgestaltung der Erfindung sind im Copolyamid folgende Monomer-Komponenten in den angegebenen Mengen einpolymerisiert:
10 - 60 Gewichts-% Laurinlactam
10 - 50 Gewichts-% 11-Aminoundecansäure
15 - 50 Gewichts-% 6,9-Salz,
wobei die Gesamtmenge der Komponenten 100 Gewichts-% beträgt.

Gemäß einer weiteren bevorzugten Ausgestaltung der Erfindung sind folgende Monomer-Komponenten in den angegebenen Mengen im Copolyamid einpolymerisiert:
20 - 80 Gewichts-% 11-Aminoundecansäure und/oder Laurinlactam
10 - 30 Gewichts-% 6,6-Salz
10 - 50 Gewichts-% 6,9-Salz
0 40 Gewichts-% 6,10-Salz,
wobei die Gesamtmenge der Komponenten 100 Gewichts-% beträgt.

Die Herstellung der Copolyamide erfolgt gemäß der Erfindung in an sich bekannter Weise. Es wird in der Regel bei Temperaturen von etwa 280 bis 300°C, bevorzugt etwa 290°C und bei Drücken von 11 bis 51 bar, bevorzugt 16 bis 31 bar gearbeitet. Unter diesen Bedingungen wird mehrere Stunden lang polymerisiert. Zur Einstellung des Drucks wird in üblicher Weise Wasser zugesetzt. Anschließend wird bevorzugt noch einige Stunden lang, vorzugsweise 1 bis 3 Stunden, bei 250 bis 300°C nachkondensiert. Insbesondere wird zweckmäßig unter Luftausschluß, d. h. unter einer Inertgasatmosphäre, gearbeitet. Es können die üblichen, für die Herstellung von Copolyamiden bekannten Katalysatoren, Kettenabbrecher und/oder sonstigen Zusätze sowie Verfahrensbedingungen angewandt werden.

Die Copolyamide können auch noch geringe Mengen anderer Polyamidbildner mit Ausnahme von Caprolactam einkondensiert enthalten.

Anstelle von Laurinlactam oder im Gemisch damit kann auch 12-Aminolaurinsäure eingesetzt werden.

Die Verwendung der Copolyamide erfolgt gemäß dem Stand der Technik.

Die einzelnen Komponenten und deren Mengenverhältnisse werden erfindungsgemäß so gewählt, daß der Schmelzpunkt des Copolyamids weniger als 140°C beträgt.

Wenn das Copolyamid nicht mindestens 10 Gewichts-% Laurinlactam und/oder 11-Aminoundecansäure enthält, kann der gewünschte Schmelzpunkt von weniger als 140°C nicht erreicht werden.

Mit Hilfe der Copolyamide lassen sich Substrate vielfältiger Art, besonders vorteilhaft temperaturempfindliche Substrate, mit Substraten gleicher oder verschiedenen Art verkleben. Die Copolyamide können bereits bei Temperaturen, die weit unter ihrem Schmelzpunkt liegen, verklebt werden, da sie bereits bei diesen Temperaturen eine vorzügliche Klebkraft entwickelt. Dies ist außerordentlich überraschend.

Beispiele für zu verklebende Substrate sind Textilmaterialien aus nativen oder synthetischen Fasern wie Wolle, Seide, Baumwolle bzw. Polyester, Polyamide. Auch andere temperaturempfindliche Substrate, wie Leder, Kunststoffolien und dergleichen, können erfindungsgemäß unter Verwendung der Copolyamide heißgesiegelt werden.

Die Erfindung wird durch die folgenden Beispiele erläutert.

### Beispiel 1:

In einem mit Rührwerk, Gasein- und -austrittsstutzen versehenen 30 l-Autoklaven werden
2 kg 11-Aminoundecansäure
4 kg Laurinlactam
4 kg 6,9-Salz
sowie 800 ml Wassereingewogen. Der Luftsauerstoff wird durch Spülen mit Stickstoff entfernt. Die Reaktionsmasse wird auf 290°C aufgeheizt, der ansteigende Autoklavinnendruck durch entsprechende Ventilstellung auf 26 bis 31 bar begrenzt. Unter diesen Bedingungen wird die Reaktionsmasse 3 Stunden lang gerührt. Danach wird der Druck innerhalb von 2 Stunden auf Normaldruck reduziert. Unter leichtem Stickstoffstrom und Rühren wird dann die Reaktionsmasse 2 Stunden drucklos nachkondensiert. Nach Beendingung der drucklosen Nachkondensationsphase wird die Schmelze mittels Zahnradpumpe durch eine Düse als Monofil ausgesponnen, gekühlt und granuliert. Das resultierende Granulat weist einen Schmelzbereich von 107 bis 114°C auf.

### Beispiel 2:

Unter den in Beispiel 1 angegebenen Polykondensationsbedingungen werden folgende polyamidbildende Monomere unter Zusatz von 800 ml Wasser zur Reaktion gebracht:
2 kg 6,6-Salz
3 kg 6,9-Salz
5 kg Laurinlactam
Das resultierende Copolyamid besitzt einen Schmelzbereich von 118 bis 125°C.

### Beispiel 3:

Analog zu Beispiel 1 wird ein Copolyamid unter Zusatz von 800 ml Wasser aus folgenden Komponenten hergestellt:
3 kg Laurinlactam
2 kg 11-Aminoundecansäure
3 kg 6,9-Salz
2 kg 6,6-Salz
Es wird ein Copolyamid mit einem Schmelzbereich von 126 bis 132°C erhalten.

### Beispiel 4:

Analog zu Beispiel 1 wird ein Copolyamid unter Zusatz von 800 ml Wasser aus folgenden Komponenten hergestellt:
3 kg 11-Aminoundecansäure
4 kg Laurinlactam
3 kg 6,6-Salz
Es wird ein Copolyamid mit einem Schmelzbereich von 125 bis 135°C erhalten.

### Vergleichsbeispiel 1:

Wie in Beispiel 1 beschrieben wird ein Copolyamid unter Zusatz von 800 ml Wasser aus den Monomer-Bestandteilen
4.5 kg Laurinlactam
1 kg 11-Aminoundecansäure
3 kg Caprolactam
1.5 kg 6,6-Salz
hergestellt. Das erhaltene Polyamid hat einen Schmelzbereich von 105 bis 115°C.

### Vergleichsbeispiel 2:

Wie in Beispiel 1 beschrieben wird ein Copolyamid unter Zusatz von 800 ml Wasser aus den Monomer-Bestandteilen
4 kg Laurinlactam
4 kg Caprolactam
2 kg 6,6-Salz
hergestellt. Das Copolyamid hat einen Schmelzbereich von 115 bis 125°C.

### Vergleichsbeispiel 3:

Entsprechend dem Stand der Technik wird ein Copolyamid unter Zusatz von 800 ml Wasser aus den Monomer-Bestandteilen
6 kg Laurinlactam
2 kg Caprolactam
2 kg 6,6-Salz
hergestellt.

Dieses Copolyamid hat einen Schmelzbereich von 125 bis 135°C.

Die Klebeeigenschaften der Copolyamide entsprechend der Erfindung sind in den folgenden Tabellen 1 bis 3 vergleichend mit den Klebeeigenschaften der caprolactamhaltigen Vergleichs-Copolyamide gegenübergestellt. Es werden jeweils Copolyamide mit gleichem Schmelzbereich verglichen.

Die erfindungsgemäßen Polyamide gemäß den Beispielen 1 bis 4 und die Vergleichspolyamide gemäß Vergleichsversuchen 1 bis 3 wurden jeweils unter Kühlung gemahlen und durch Siebung in eine Fraktion von 0 bis 200 µm getrennt. Das Pulver wurde auf einen handelsüblichen Einlagestoff aus Baumwolle (Flächengewicht 70 g/m²) mittels einer in der Beschichtungsindustrie üblichen Pulverpunktmaschine mit einem Auftragsgewicht von ca. 15 g pro m² in einem 17mesh-Raster aufgedruckt.

Die beschichteten Einlagestoffe wurden auf einer in der Konfektionsindustrie üblichen elektrisch beheizten Bügelpresse mit einem Oberstoff aus 45 % Schurwolle / 55 % Polyester (Flächengewicht 200 g/m²) unter Variierung der Plattentemperatur verbügelt. Der Pressendruck betrug 350 mbar. Die Temperaturen der Platte der Bügelpresse sind in den Tabellen 1 bis 3 angegeben.

Weiterhin sind in den Tabellen die Schmelzbereiche und Viskositäten der jeweiligen Copolyamide angegeben. Der Schmelzbereich wurde nach DIN 53736, Teil B (visuelle Bestimmung der Schmelztemperatur von teilkristallinen Kunststoffen) auf einem Heiztisch-Mikroskop ermittelt.

Die Lösungsviskosität wurde nach DIN 53727 (Bestimmung der Viskosität von Lösungen; Polyamide in verdünnter Lösung) ermittelt.

Von den Laminaten wurden 5 cm breite Streifen ausgeschnitten, und auf einer Zerreißmaschine auf ihre Trennfestigkeit (N/5 cm) - unbehandelt nach 3maligem Waschen bei 40°C, nach 3maligem Chemisch-Reinigen - nach DIN 54310 gemessen.

Bei den angegebenen Werten handelt es sich um Mittelwerte von 5 Einzelmessungen.

Die in der Tabelle verwendeten Abkürzungen sind wie folgt zu verstehen: MFI: Schmelzflußindex (Melt-Flow-Index) gemessen bei 150°C; 2,16kp (DIN 53735).
6: Caprolactam
6.6: 6,6-Salz
6.9: 6,9-Salz
12: Laurinlactam
11: 11-Aminoundecansäure

**Tabelle 1**

| Produkt | Vergleichsbeispiel 1 | Beispiel 1 gemäß Erfindung |
|---|---|---|
| Zusammensetzung (Gew.%) | 6: 30 | 11: 20 |
| | 6.6: 15 | 12: 40 |
| | 12: 45 | 6.9: 40 |
| | 11: 10 | |
| Schmelzbereich (°C) | 105-115 | 107-114 |
| Lösungsviskosität | 1,34 | 1,43 |
| MFI 150°C/2,16kp (g/10 min) | 40 | 12 |

| Verbügelungstemperatur | Trennfestigkeit unbehandelt | Trennfestigkeit unbehandelt |
|---|---|---|
| 80°C | keine Haftung | 5,0 |
| 90°C | 1,5 | 7,5 |
| 100°C | 5,0 | 10,0 |
| 110°C | 7,5 | 12,5 |
| 120°C | 8,0 | 13,0 |
| 130°C | 8,0 | 15,0 |
| 140°C | 9,0 | 15,5 |
| 150°C | 8,5 | 16,5 |

| Verbügelungstemperatur | Trennfestigkeit nach Wäsche | Trennfestigkeit nach Wäsche |
|---|---|---|
| 80°C | keine Haftung | 3,5 |
| 90°C | keine Haftung | 6,0 |
| 100°C | 2,0 | 8,5 |
| 110°C | 4,0 | 10,0 |
| 120°C | 4,0 | 11,0 |
| 130°C | 4,5 | 12,5 |
| 140°C | 7,0 | 12,5 |
| 150°C | 6,0 | 12,5 |

| Verbügelungstemperatur | Festigkeit nach Chem. Reinigung | Festigkeit nach Chem. Reinigung |
|---|---|---|
| 80°C | keine Haftung | 3,0 |
| 90°C | keine Haftung | 6,0 |
| 100°C | 4,0 | 7,0 |
| 110°C | 4,0 | 8,0 |
| 120°C | 4,0 | 11,5 |
| 130°C | 4,5 | 11,0 |
| 140°C | 7,0 | 11,5 |
| 150°C | 6,0 | 12,0 |

**Tabelle 2**

| Produkt | Vergleichsbeispiel 2 | Beispiel 2 gemäß Erfindung |
|---|---|---|
| Zusammensetzung (Gew.%) | 6: 40 | 6.6: 20 |
| | 6.6: 20 | 6.9: 30 |
| | 12: 40 | 12: 50 |
| Schmelzbereich (°C) | 115-125 | 118-125 |
| Lösungsviskosität | 1,48 | 1,43 |
| MFI 150°C/2, 16kp (g/10 min) | 10 | 12 |

| Verbügelungstemperatur | Trennfestigkeit unbehandelt | Trennfestigkeit unbehandelt |
|---|---|---|
| 80°C | keine Haftung | 3,0 |
| 90°C | keine Haftung | 4,0 |
| 100°C | keine Haftung | 6,0 |
| 110°C | keine Haftung | 11,0 |
| 120°C | 5,0 | 13,5 |
| 130°C | 7,0 | 14,5 |
| 140°C | 8,0 | 14,5 |
| 150°C | 9,0 | 15,0 |

| Verbügelungstemperatur | Trennfestigkeit unbehandelt | Trennfestigkeit unbehandelt |
|---|---|---|
| 80°C | keine Haltung | 2,5 |
| 90°C | keine Haftung | 3,0 |
| 100°C | keine Haftung | 4,0 |
| 110°C | keine Haftung | 7,5 |
| 120°C | 5,0 | 10,0 |
| 130°C | 5,5 | 11,5 |
| 140°C | 6,0 | 12,5 |
| 150°C | 7,5 | 13,0 |

| Verbügeluugstemperatur | Festigkeit nach Chem. Reinigung | Festigkeit nach Chem. Reinigung |
|---|---|---|
| 80°C | keine Haltung | 2,5 |
| 90°C | keine Haftung | 3,0 |
| 100°C | keine Haftung | 4,0 |
| 110°C | keine Haftung | 8,0 |
| 120°C | 5,0 | 9,5 |
| 130°C | 5,5 | 11,0 |
| 140°C | 6,0 | 11,0 |
| 150°C | 7,0 | 13,0 |

**Tabelle 3**

| Produkt | Vergleichsbeispiel 3 | Beispiel 3a gemäß Erfindung | Beispiel 3b gemäß Erfindung |
|---|---|---|---|
| Zusammensetzung (Gew.%) | 6: 20 | 6.6: 20 | 6.6 : 30 |
| | 6.6: 20 | 6.9: 30 | 12: 40 |
| | 12: 60 | 11: 20 | 11: 30 |
| | | 12: 30 | |
| Schmelzbereich (°C) | 125-135 | 126-132 | 125-135 |
| Lösungsviskosität | 1,47 | 1,45 | 1,45 |
| MFI 150°C/2, 16kp (g/10 min) | 15 | 12 | 13 |

| Verbügelungstemperatur | Trennfestigkeit unbehandelt | Trennfestigkeit unbehandelt | Trennfestigkeit unbehandelt |
|---|---|---|---|
| 80°C | keine Haftung | 5,0 | 4,0 |
| 90°C | keine Haftung | 6,0 | 5,5 |
| 100°C | keine Haftung | 7,5 | 8,0 |
| 110°C | keine Haftung | 8,0 | 10,0 |
| 120°C | 2,0 | 10,5 | 11,0 |
| 130°C | 9,0 | 12,0 | 12,0 |
| 140°C | 11,0 | 15,0 | 12,5 |
| 150°C | 13,5 | 16,0 | 13,5 |

| Verbügelungstemperatur | Trennfestigkeut nach Wäsche | Trennfestigkeut nach Wäsche | Trennfestigkeut nach Wäsche |
|---|---|---|---|
| 80°C | keine Haltung | 2,5 | 3,0 |
| 90°C | keine Haftung | 4,0 | 4,0 |
| 100°C | keine Haftung | 5,5 | 7,0 |
| 110°C | keine Haftung | 5,5 | 9,5 |
| 120°C | 1,5 | 9,5 | 11,0 |
| 130°C | 6,5 | 12,0 | 11,5 |
| 140°C | 9,5 | 13,0 | 12,5 |
| 150°C | 12,5 | 14,0 | 13,5 |

| Verbügeluugstemperatur | Festigkeit nach Chem. Reinigung | Festigkeit nach Chem. Reinigung | Festigkeit nach Chem. Reinigung |
|---|---|---|---|
| 80°C | keine Haltung | 3,0 | 3,5 |
| 90°C | keine Haftung | 5,5 | 4,5 |
| 100°C | keine Haftung | 6,5 | 6,5 |
| 110°C | keine Haftung | 6,5 | 9,0 |
| 120°C | 2,0 | 8,5 | 11,0 |
| 130°C | 7,5 | 10,5 | 11,5 |
| 140°C | 10,0 | 11,5 | 12,5 |
| 150°C | 12,0 | 13,0 | 14,0 |

Aus Tabelle 1 geht hervor, daß das erfindungsgemäße Copolyamid gemäß Beispiel 1 bei vergleichbarem Schmelzbereich gegenüber dem Vergleichs-Copolyamid eine erhöhte Lösungsviskosität und einen verringerten Schmelzflußindex aufweist. Dadurch bedingt wird die Rückschlagegefahr des Schmelzklebers stark vermindert. Trotz des verringerten Schmelzflußindex zeichnet das Produkt aus Beispiel 1 sich durch deutlich höhere Adhäsionswerte bei niedrigen Temperaturen, verglichen mit dem Polymaid gemäß Vergleichsbeispiel 1, aus. Durch Vergleich der Trennfestigkeiten zeigt sich, daß das Copolyamid gemäß Beispiel 1 auch bei weit unter seinem Schmelzpunkt liegenden Temperaturen mit guten Haftwerten verklebt werden kann und nach Verkleben bei höheren Temperaturen eine wesentlich höhere Trennfestigkeit als das Vergleichs-Copolyamid hat. Auch die Trennfestigkeit nach Naßwäsche bzw. chemischer Reinigung ist jeweils praktisch doppelt so hoch wie die des Vergleichs-Copolyamids.

Aus Tabelle 2 läßt sich eine ähnliche Tendenz bei den Copolyamiden mit einem Schmelzbereich von 115 bis 125°C entnehmen. Während beispielsweise das Copolyamid gemäß Beispiel bereits bei einer Temperatur von mehr als 30°C unterhalb des Schmelzbereichs haftet, kann mit dem Vergleichs-Copolyamid eine ähnlich große Haftung erst bei Verkleben bei einer Temperatur im Schmelzbereich erreicht werden.

Die Trennfestigkeit des Copolyamids aus Beispiel 2 ist sowohl nach der Wäsche als auch chemischer Reinigung fast doppelt so hoch wie die des entsprechenden Copolyamids nach Vergleichsbeispiel 2.

Analoge Ergebnisse ergeben sich laut Tabelle 3 auch für Copolyamide mit einem Schmelzbereich von 125 bis 135°C. So zeigt das Copolyamid gemäß Beispiel 3 bereits nach Verbügeln bei 80°C eine doppelt so hohe Trennfestigkeit wie das Copolyamid aus Vergleichsbeispiel 3 nach Verbügelung bei 120°C.

Die erfindungsgemäß verwendeten Copolyamide lassen sich demnach nicht nur bei sehr niedrigen Temperaturen verbügeln, was sie besonders geeignet erscheinen läßt für das Verkleben empfindlicher Substrate, sondern sie zeigen auch gegenüber den Copolyamiden des Standes der Technik eine deutlich verbesserte Klebekraft.

## Patentansprüche

1. Verwendung von Copolyamiden als Schmelzkleber zum Heißsiegeln **dadurch gekennzeichnet, daß**
A) im Copolyamid mindestens 3 der folgenden Monomer-Komponenten einpolymerisiert sind
a) äquimolares Gemisch von Adipinsäure und Hexamethylendiamin (6,6-Salz)
b) Laurinlactam
c) 11-Aminoundecansäure
d) äquimolares Gemisch von Azelainsäure und Hexamethylendiamin (6,9-Salz)
e) äquimolares Gemisch von Sebacinsäure und Hexamethylendiamin (6,10-Salz)
f) äquimolares Gemisch von Dodecandisäure und Hexamethylendiamin (6,12-Salz)
B) der Schmelzpunkt des Copolyamids weniger als 140°C beträgt
und
C) Laurinlactam und/oder 11-Aminoundecansäure in einer Menge von mindestens 10 Gewichts-% einpolymerisiert sind, wobei die Gesamtmenge der Komponenten a) bis f) 100 Gewichts-% beträgt.

2. Verwendung von Copolyamiden nach Anspruch 1, wobei, falls die Monomer-Komponenten Laurinlactam, 6,6-Salz, 6,10-Salz und/oder 6,12 Salz sind, mindestens noch eine weitere Monomer-Komponente im Copolyamid einpolymerisiert sein muß.

3. Verwendung von Copolyamiden nach Anspruch 1, wobei die Monomer-Komponenten im Copolyamid in folgenden Mengen einpolymerisiert sind:
10 - 60 Gewichts-% Laurinlactam
10 - 50 Gewichts-% 11-Aminoundecansäure
15 - 50 Gewichts-% 6,9-Salz,
wobei die Gesamtmenge der Komponenten 100 Gewichts-% beträgt.

4. Verwendung von Copolyamiden nach den Ansprüchen 1 bis 3, wobei die Monomer-Komponenten im Copolyamid in folgenden Mengen einpolymerisiert sind:
20 - 80 Gewichts-% 11-Aminoundecansäure und/oder Laurinlactam
10 - 30 Gewichts-% 6,6-Salz
10 - 50 Gewichts-% 6,9-Salz
0 - 40 Gewichts-% 6,10-Salz
wobei die Gesamtmenge der Komponenten 100 Gewichts-% beträgt.

5. Verwendung von Copolyamiden nach den Ansprüchen 1 bis 4, wobei die Monomer-Komponenten im Copolyamid in folgenden Mengen einpolymerisiert sind:
40 - 60 Gewichts-% Laurinlactam
10 - 30 Gewichts-% 6,6-Salz
20 - 40 Gewichts-% 6,9-Salz
wobei die Gesamtmenge der Komponenten 100 Gewichts-% beträgt.

6. Verwendung von Copolyamiden nach den Ansprüchen 1 bis 4, wobei die Monomer-Komponenten im Copolyamid in folgenden Mengen einpolymerisiert sind:
10 - 30 Gewichts-% 11-Aminoundecansäure
30 - 50 Gewichts-% Laurinlactam
30 - 50 Gewichts-% 6,9-Salz
wobei die Gesamtmenge der Komponenten 100 Gewichts-% beträgt.

7. Verwendung von Copolyamiden nach den Ansprüchen 1 bis 4, wobei die Monomer-Komponenten im Copolyamid in folgenden Mengen einpolymerisiert sind:
20 - 40 Gewichts-% 11-Aminoundecansäure
10 - 30 Gewichts-% Laurinlactam
20 - 40 Gewichts-% 6,6-Salz
wobei die Gesamtmenge der Komponenten 100 Gewichts-% beträgt.

8. Verwendung von Copolyamiden nach den Ansprüchen 1 bis 4, wobei die Monomer-Komponenten im Copolyamid in folgenden Mengen einpolymerisiert sind:
20 - 40 Gewichts-% Laurinlactam
10 - 30 Gewichts-% 11-Aminoundecansäure
20 - 40 Gewichts-% 6,9-Salz
10 - 30 Gewichts-% 6,6-Salz
wobei die Gesamtmenge der Komponenten 100 Gewichts-% beträgt.

## Claims

1. The use of copolyamides as melt adhesives for heat sealing,
characterized in that
A) at least three of the following monomer components are copolymerized with the copolyamide:
a) an equimolar mixture of adipic acid and hexamethylenediamine (6,6 salt)
b) lauric acid lactam
c) 11-aminoundecanoic acid
d) an equimolar mixture of azelaic acid and hexamethylenediamine (6,9 salt)
e) an equimolar mixture of sebacic acid and hexamethylenediamine (6,10 salt)
f) an equimolar mixture of dodecane dicarboxylic acid and hexamethylenediamine (6,12 salt)
B) the melting point of the copolyamide is lower than 140°C
and
C) lauric acid lactam and/or 11-aminoundecanoic acid are copolymerized into the copolyamide in an amount of at least 10% by weight, the total amount of components a) to f) constituting 100% by weight.

2. The use of copolyamides of claim 1 wherein, in the event that the monomer components are lauric acid lactam, 6,6 salt, 6,10 salt and/or 6,12 salt, at least one additional monomer component must be copolymerized within the copolyamide.

3. The use of copolyamides of claim 1, wherein the monomer components are copolymerized in the following amounts in the copolyamide:
10 - 60% by weight of lauric acid lactam
10 - 50% by weight of 11-aminoundecanoic acid
15 - 50% by weight of 6,9 salt,
the total amount of the components constituting 100% by weight.

4. The use of copolyamides of claims 1 to 3, wherein the monomer components are copolymerized in the following amounts in the copolyamide:
20 - 80% by weight of 11-aminoundecanoic acid and/or lauric acid lactam
10 - 30% by weight of 6,6 salt
10 - 50% by weight of 6,9 salt
0 - 40% by weight of 6,10 salt,
the total amounts of the components constituting 100% by weight.

5. The use of copolyamides of claims 1 to 4, wherein the monomer components are copolymerized in the following amounts in the copolyamide:
40 - 60% by weight of lauric acid lactam
10 - 30% by weight of 6,6 salt
20 - 40% by weight of 6,9 salt,
the total amounts of the components constituting 100% by weight.

6. The use of copolyamides of claims 1 to 4, wherein the monomer components are copolymerized in the following amounts in the copolyamide:
10 - 30% by weight of 11-aminoundecanoic acid
30 - 50% by weight of lauric acid lactam
30 - 50% by weight of 6,9 salt.
the total amounts of the components constituting 100% by weight.

7. The use of copolyamides of claims 1 to 4, wherein the monomer components are copolymerized in the following amounts in the copolyamide:
20 - 40% by weight of 11-aminoundecanoic acid
10 - 30% by weight of lauric acid lactam
20 - 40% by weight of 6,6 salt,
the total amounts of the components constituting 100% by weight.

8. The use of copolyamides of claims 1 to 4, wherein the monomer components are copolymerized in the following amounts in the copolyamide:
20 - 40% by weight of lauric acid lactam
10 - 30% by weight of 11-aminoundecanoic acid
20 - 40% by weight of 6,6 salt
10 - 30% by weight of 6,9 salt,
the total amounts of the components constituting 100% by weight.

## Revendications

1. Utilisation de copolyamides en tant que colles fusibles pour scellement à chaud, caractérisée en ce que
A) au moins 3 des composants monomères suivants sont inclus par polymérisation dans le copolyamide :
a) mélange équimolaire d'acide adipique et d'hexaméthylène diamine (sel 6,6)
b) lactame laurique
c) acide 11-aminoundécanoïque
d) mélange équimolaire d'acide azélaïque et d'hexaméthylène diamine (sel 6,9)
e) mélange équimolaire d'acide sébacique et d'hexaméthylène diamine (sel 6,10)
f) mélange équimolaire de diacide dodécanoïque et d'hexaméthylène diamine (sel 6,12)
B) le point de fusion du copolyamide est inférieur à 140 °C ;
et
C) le lactame laurique et/ou l'acide 11-aminoundécanoïque sont incorporés par polymérisation en une quantité d'au moins 10 % en poids, la quantité totale des composants a) à f) étant égale à 100 % en poids.

2. Utilisation de copolyamides selon la revendication 1, dans laquelle, lorsque les composants monomères sont le lactame laurique, le sel 6,6, le sel 6,10 et/ou le sel 6,12, au moins un autre composant monomère doit également être incorporé par polymérisation dans le copolyamide.

3. Utilisation de copolyamides selon la revendication 1, dans laquelle les composants monomères sont incorporés par polymérisation dans le copolyamide dans les quantités suivantes :
10 à 60 % en poids de lactame laurique
10 à 50 % en poids d'acide 11-aminoundécanoïque
15 à 50 % en poids de sel 6,9
la quantité totale des composants étant égale à 100 % en poids.

4. Utilisation de copolyamides selon les revendications 1 à 3, dans laquelle les composants monomères sont incorporés par polymérisation dans le copolyamide dans les quantités suivantes :
20 à 80 % en poids d'acide 11-aminoundécanoïque et/ou de lactame laurique
10 à 30 % en poids de sel 6,6
10 à 50 % en poids de sel 6,9
0 à 40 % en poids de sel 6,10
la quantité totale des composants étant égale à 100 % en poids.

5. Utilisation de copolyamides selon les revendications 1 à 4, dans laquelle les composants monomères sont incorporés par polymérisation dans le copolyamide dans les quantités suivantes :
40 à 60 % en poids de lactame laurique
10 à 30 % en poids de sel 6,6
20 à 40 % en poids de sel 6,9
la quantité totale des composants étant égale à 100 % en poids.

6. Utilisation de copolyamides selon les revendications 1 à 4, dans laquelle les composants monomères sont incorporés par polymérisation dans le copolyamide dans les quantités suivantes :
10 à 30 % en poids d'acide 11-aminoundécanoïque
30 à 50 % en poids de lactame laurique
30 à 50 % en poids de sel 6,9
la quantité totale des composants étant égale à 100 % en poids.

7. Utilisation de copolyamides selon les revendications 1 à 4, dans laquelle les composants monomères sont incorporés par polymérisation dans le copolyamide dans les quantités suivantes :
20 à 40 % en poids d'acide 11-aminoundécanoïque
10 à 30 % en poids de lactame laurique
20 à 40 % en poids de sel 6,6
la quantité totale des composants étant égale à 100 % en poids.

8. Utilisation de copolyamides selon les revendications 1 à 4, dans laquelle les composants monomères sont incorporés par polymérisation dans le copolyamide dans les quantités suivantes :
20 à 40 % en poids de lactame laurique
10 à 30 % en poids d'acide 11-aminoundécanoïque
20 à 40 % en poids de sel 6,9
10 à 30 % en poids de sel 6,6
la quantité totale des composants étant égale à 100 % en poids.
